# EUROPÄISCHE PATENTANMELDUNG

(11) **EP 4 674 252 A1**
(43) Veröffentlichungstag der Anmeldung: **07.01.2026**
(21) Anmeldenummer: 24215474.8
(22) Anmeldetag: 26.11.2024
(51) Int. Cl.: A01D 75/00, A01D 41/14

(54) **STÜTZRADZUSAMMENBAU FÜR EINEN ERNTEVORSATZ EINER SELBSTFAHRENDEN ERNTEMASCHINE**

(30) Priorität: 03.07.2024 EP 24186176
(71) Anmelder: Deere & Company, Moline, IL 61265 (US)
(72) Erfinder: WEITENBERG, CLEMENS, 68163 Mannheim (DE); SCHILD, JAN-DIRK, 68163 Mannheim (DE); HUENING, MARTIN, 68163 Mannheim (DE); VOGELSANG, ANDRE, 68163 Mannheim (DE); SCHLAMANN, FRANK, 68163 Mannheim (DE); KRIEGER, THOMAS, 68163 Mannheim (DE); ARALEKAR, SUNIL, 68163 Mannheim (DE); SCHLAMANN, MICHAEL, 68163 Mannheim (DE); PATIL, AKSHAY, 68163 Mannheim (DE)
(74) Vertreter: Holst, Sönke

(57) **Zusammenfassung**

Es wird ein Stützradzusammenbau (28) für einen Erntevorsatz (10) beschrieben, wobei:
der Erntevorsatz (10) ein tragendes Gestell umfasst, an einer selbstfahrenden Erntemaschine anbringbar und in einer Vorwärtsrichtung (V) über ein Feld bewegbar ist,
der Stützradzusammenbau (28) zumindest ein Rad (36, 38) umfasst, das in der Weise am tragenden Gestell des Erntevorsatzes (10) befestigt ist, dass das Rad (36, 38) zwischen einer Ernteposition, in der das Rad (36, 38) nicht im Bodeneingriff ist, und einer Straßenfahrposition beweglich ist, in der sich das Rad (36, 38) im Bodeneingriff befindet und den bei der Straßenfahrt an der Erntemaschine verbleibenden Erntevorsatz (10) abstützt
und sich das Rad (36, 38) in der Ernteposition oberhalb des Erntevorsatzes (10) befindet.

## Beschreibung

Die Erfindung betrifft einen Stützradzusammenbau für einen Erntevorsatz, wobei:
der Erntevorsatz ein tragendes Gestell umfasst, an einer selbstfahrenden Erntemaschine anbringbar und in einer Vorwärtsrichtung über ein Feld bewegbar ist,
der Stützradzusammenbau zumindest ein Rad umfasst, das in der Weise am tragenden Gestell des Erntevorsatzes befestigt ist, dass das Rad zwischen einer Ernteposition, in der das Rad nicht im Bodeneingriff ist, und einer Straßenfahrposition beweglich ist, in der sich das Rad im Bodeneingriff befindet und den bei der Straßenfahrt an der Erntemaschine verbleibenden Erntevorsatz abstützt.

### Stand der Technik

An selbstfahrenden Erntemaschinen finden Erntevorsätze zum Abernten und Einbringen von Erntegut Verwendung. Während Schneidwerke für Mähdrescher gewöhnlich in sich starr sind und zum Straßentransport vom Mähdrescher getrennt und auf einem Transportwagen abgelegt werden, werden Maispflücker für Mähdrescher und Maismähvorsätze für Feldhäcksler in der Regel klappbar ausgeführt. Es gibt jedoch auch klappbare Schneidwerke für Mähdrescher. Zum Straßentransport werden äußere Seitenteile der Erntevorsätze in eine Transportstellung verschwenkt, in der Regel nach oben oder innen. Sie bleiben beim Straßentransport an der Vorderseite der Erntemaschine befestigt. Dadurch erübrigen sich Maßnahmen, den Erntevorsatz vom Einzugskanal der Erntemaschine abzukoppeln, ihn auf einem Fahrwerk abzulegen (vgl. EP 2 805 593 A1) oder ein in den Erntevorsatz integriertes Fahrwerk auszufahren (s. beispielsweise EP 2 939 519 A1) und den nunmehr auf einem Fahrwerk abgestützten Erntevorsatz an der Rückseite der Erntemaschine anzukoppeln, um ihn beim Transport hinter der Erntemaschine her zu ziehen.

Falls der Erntevorsatz beim Transport an der Vorderseite der Erntemaschine verbleibt, stellt sich jedoch das Problem, dass der Erntevorsatz in vielen Fällen eine derart hohe Masse (Gewicht) aufweist, dass zulässige Achslasten insbesondere an der Vorderachse der Erntemaschine überschritten werden. Daher wurde vorgeschlagen, den Erntevorsatz bei der Straßenfahrt durch ein oder mehrere Stützräder abzustützen. Zur Anbringung eines oder mehrerer Stützräder gibt es den Ansatz, das Stützrad abnehmbar am Erntevorsatz anzubringen, sei es direkt oder an einem Fahrgestell, und das Stützrad für den Erntebetrieb abzunehmen oder es aktorisch zwischen einer Betriebsstellung mit Bodenkontakt und einer angehobenen Außerbetriebsstellung zu bewegen (EP 1 046 329 A2). Weiterhin wurde vorgeschlagen, das Stützrad rückwärtig des Erntevorsatzes anzubringen und auch bei der Ernte im Bodeneingriff zu lassen (DE 10 2013 111 426 A1) oder es mittels eines an der Rückseite des Erntevorsatzes um die Hochachse schwenkbar gelagerten Auslegers aus der Position rückwärtig des Erntevorsatzes, die es bei der Ernte innehat, für die Straßenfahrt an die Vorderseite des Erntevorsatzes zu verlagern (DE 10 2011 122 660 A1).

### Aufgabe

Während das Abnehmen des Stützrads oder des damit ausgerüsteten Fahrgestells bei der Ernte den Nachteil hat, dass das Stützrad bzw. das Fahrgestell zunächst an einer geeigneten Stelle abzulegen ist und später wieder abgeholt werden muss, was mitunter längere, an sich unnötige Leerfahrten der Erntemaschine bedeutet, hat die Anbringung des Stützrads an der Rückseite des Erntevorsatzes den Nachteil, dass sich das Stützrad weit hinter dem Schwerpunkt des Erntevorsatzes befindet und somit hohe Stützlasten aufnehmen muss. Schließlich hat die Verlagerung der Stützräder zwischen Vorder- und Rückseite des Erntevorsatzes an einem um die Hochachse schwenkbar an der Rückseite des Erntevorsatzes angelenkten Ausleger den Nachteil, dass dieser Ausleger ungünstigen Hebelverhältnissen unterliegt und somit entsprechend massiv aufgebaut sein muss.

Die der Erfindung zu Grunde liegende Aufgabe wird darin gesehen, die geschilderten Problem zu vermeiden, d.h. eine verbesserte Anbringung eines Stützrads am Erntevorsatzes zu ermöglichen.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird ein Stützradzusammenbau für einen Erntevorsatz vorgeschlagen, der ein tragendes Gestell umfasst, an einer selbstfahrenden Erntemaschine anbringbar und in einer Vorwärtsrichtung über ein Feld bewegbar ist. Der Stützradzusammenbau umfasst zumindest ein Rad, das in der Weise am tragenden Gestell des Erntevorsatzes befestigt ist, dass das Rad zwischen einer Ernteposition, in der das Rad nicht im Bodeneingriff ist, und einer Straßenfahrposition beweglich ist, in der sich das Rad im Bodeneingriff befindet und den bei der Straßenfahrt an der Erntemaschine verbleibenden Erntevorsatz abstützt. Das Rad befindet sich in der Ernteposition oberhalb des Erntevorsatzes.

Mit anderen Worten ist vorgesehen, dass das Rad in der Ernteposition inaktiv ist und oberhalb des Erntevorsatzes abgelegt wird. Dadurch verkürzt man, gegenüber einer im Stand der Technik vorgesehenen Position des Rads in der Ernteposition an der Rückseite des Erntevorsatzes, die Länge der Abstützung des Rads, was die eingangs erwähnte Problematik zumindest reduziert.

Der Stützradzusammenbau kann eine rückwärtige, sich insbesondere von einem oberen Querträger des tragenden Gestells des Erntevorsatzes nach vorn erstreckende Strebe umfassen. Die rückwärtige Strebe kann um eine quer zur Vorwärtsrichtung verlaufende Achse zwischen einer angehobenen Ernteposition und einer abgesenkten Straßenfahrposition schwenkbar am Gestell des Erntevorsatzes angelenkt sein. Dadurch erreicht man, dass der Stützradzusammenbau sich in hinreichender Höhe oberhalb des Erntegutflusses im Erntevorsatz befindet.

Die Halterung kann weiterhin eine vordere Strebe umfassen, die um eine (sich in der Horizontalebene des Erntevorsatzes) quer zur Vorwärtsrichtung verlaufende Achse schwenkbar mit der rückwärtigen Strebe verbunden ist, wobei am äußeren Ende der vorderen Strebe eine Radhalterung mit dem Rad schwenkbar angebracht ist- Die vordere Strebe erstreckt sich in dieser Ausführungsform in der Ernteposition oberhalb der rückwärtigen Strebe von der Achse nach hinten und in der Straßenfahrposition von der Achse nach vorn und unten.

Die vordere Strebe kann in der Straßenfahrposition mit einer Längsstrebe des Erntevorsatzes koppelbar sein, an welcher insbesondere eine Teilerspitze und/oder ein Tastmechanismus zur Erfassung der Pflanzenreihen auf dem Feld, der zur selbsttätigen Lenkung der Erntemaschine dient, angebracht ist.

Die vordere Strebe kann in der Straßenfahrposition mittels eines Hakens mit einem an der Längsstrebe angebrachten Haltestift um dessen sich quer erstreckende Achse drehbar koppelbar und/oder mittels eines durch einen Verriegelungszylinders verschiebbaren Bolzens (relativ zur Längsstrebe) gegenüber einer Bewegung in der Vorwärtsrichtung nach vorn sicherbar sein.

Zudem kann die Längsstrebe gegenüber dem tragenden Gestell des Erntevorsatzes um eine Achse drehbar sein, wobei die Bewegung der Längsstrebe um die Achse durch ein Federelement gedämpft und/oder begrenzt ist. Auch kann die rückwärtige Strebe in der Straßenfahrposition um die Achse frei schwenkbar am tragenden Gestell des Erntevorsatzes gelagert sein, während die vordere Strebe und die rückwärtige Strebe in der Straßenfahrposition gegeneinander gegenüber einer Drehung um die Achse drehfest arretiert sind. Der Stützradzusammenbau ist demnach nicht in sich starr, was den Nachteil hätte, dass sich eventuelle Bodenunebenheiten direkt auf den Erntevorsatz übertragen und zu hohen Belastungen des Rads und des Stützradzusammenbaus führen würde, sondern in einem gewissen Maße in sich flexibel, denn durch die beschriebenen Freiheitsgrade erhält man ein Parallelogramm mit einer hinreichenden Elastizität, das die im Falle eines in sich starren Stützradzusammenbaus zu erwartenden Probleme vermeidet.

Die Schwenkbewegung der vorderen Strebe und der rückwärtigen Strebe um die jeweiligen Achsen zwischen der Ernteposition und der Straßenfahrposition kann mittels eines einzigen Aktors, insbesondere eines Hydraulikzylinders, bewerkstelligbar sein. Hierzu kann der Aktor derart mit den besagten Streben gekoppelt sein, dass ausgehend von der Ernteposition zunächst die rückwärtige Strebe um die Achse, mit der sie am Gestell angelenkt ist, nach unten geschwenkt wird und anschießend die vordere Strebe gegenüber der rückwärtigen Strebe um ihre Achse (zunächst nach oben und anschließend) nach vorn und unten in die Straßenfahrposition geschwenkt wird. Dazu kann vorgesehen sein, dass der Aktor mit einem ersten Ende mit der vorderen Strebe gekoppelt ist und mit einem zweiten Ende über einen Zapfen, der in einem Langloch der rückwärtigen Strebe verschiebbar gelagert ist, mit der rückwärtigen Strebe und zudem direkt, insbesondere über eine Stange, mit dem tragenden Gestell des Erntevorsatzes gekoppelt ist.

Die vordere Strebe kann in der Straßenfahrposition von oben her an einem Anschlag der rückwärtigen Strebe anliegen, sodass die vordere Strebe und die rückwärtige Strebe drehfest gekoppelt sind, und/oder die vordere Strebe in der Ernteposition von unten her an einem Anschlag der rückwärtigen Strebe anliegen. Insbesondere handelt es sich in beiden Fällen um denselben Anschlag.

Die Radhalterung ist vorzugsweise in der Straßenfahrposition um die Hochachse drehbar mit der vorderen Strebe verbunden. Das Rad oder die Räder sind demnach in an sich bekannter Weise als Nachlauflenkräder ausgeführt.

Zwischen der Radhalterung und der vorderen Strebe kann eine (die Drehung der Radhalterung gegenüber der vorderen Strebe hemmende, jedoch nicht komplett unterbindende) Bremse angeordnet sein, die in der Straßenfahrposition und der Ernteposition aktiv ist und bei der Bewegung der vorderen Strebe aus der Straßenfahrposition in die Ernteposition selbsttätig gelöst wird, damit die Radhalterung mit dem Rad während der Bewegung in die Ernteposition schwerkraftbedingt in eine nach hinten orientierte Stellung gelangt, während die Bremse bei der Bewegung der vorderen Strebe aus der Ernteposition in die Straßenfahrposition arretiert bleibt. Durch die Bremsung des Rads oder der Räder bei der Straßenfahrt erreicht man, dass ein ansonsten möglicherweise auftretendes Flattern vermieden wird. Das Rad wird in der Ernteposition in eine geeignete Stellung, nämlich nach hinten, gedreht, indem die Bremse bei der Bewegung aus der Straßenfahrposition in die Ernteposition gelöst wird und die Schwerkraft die Radhalterung mit dem Rad um die Achse dreht, um welche die Radhalterung gegenüber der vorderen Strebe drehbar ist. Ansonsten bleibt die Bremse arretiert, um ein unerwünschtes Drehen der Radhalterung zu vermeiden.

### Ausführungsbeispiel

In den Zeichnungen ist ein nachfolgend näher beschriebenes Ausführungsbeispiel der Erfindung dargestellt. Es zeigt:
- Fig. 1: eine perspektivische Ansicht eines Erntevorsatzes mit einem Stützradzusammenbau in der Ernteposition,
- Fig. 2: eine perspektivische Ansicht des Erntevorsatzes in einer eingefalteten Stellung, wobei sich der Stützradzusammenbau in der Ernteposition befindet,
- Fig. 3: eine perspektivische Ansicht des Erntevorsatzes in einer eingefalteten Stellung mit in die Straßenfahrposition verbrachtem Sützradzusammenbau,
- Fig. 4: eine seitliche Ansicht des Stützradzusammenbaus in der Ernteposition,
- Fig. 5: eine seitliche Ansicht des Stützradzusammenbaus in einer Zwischenposition,
- Fig. 6: eine seitliche Ansicht des Stützradzusammenbaus in der Straßenfahrposition,
- Fig. 7: eine seitliche Ansicht des mittleren Bereichs des Stützradzusammenbaus beim Ankoppeln des Zwischenelements an der Längsstrebe,
- Fig. 8: eine seitliche Ansicht des mittleren Bereichs des Stützradzusammenbaus mit an der Längsstrebe angekoppelten Zwischenelements, und
- Fig. 9: eine seitliche Ansicht des mittleren Bereichs des Stützradzusammenbaus beim Abkoppeln des Zwischenelements von der Längsstrebe.

### Erntevorsatz

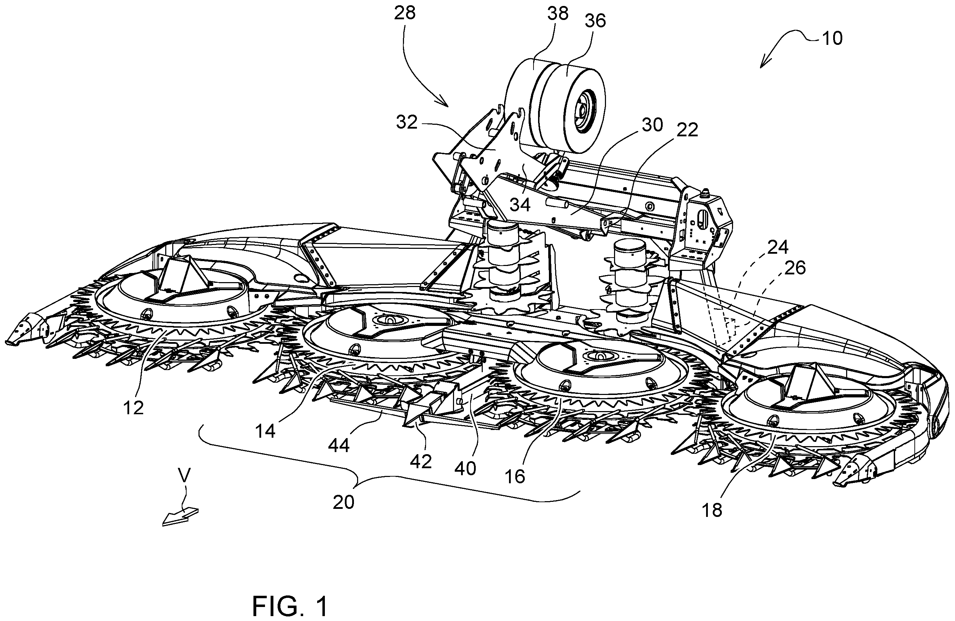

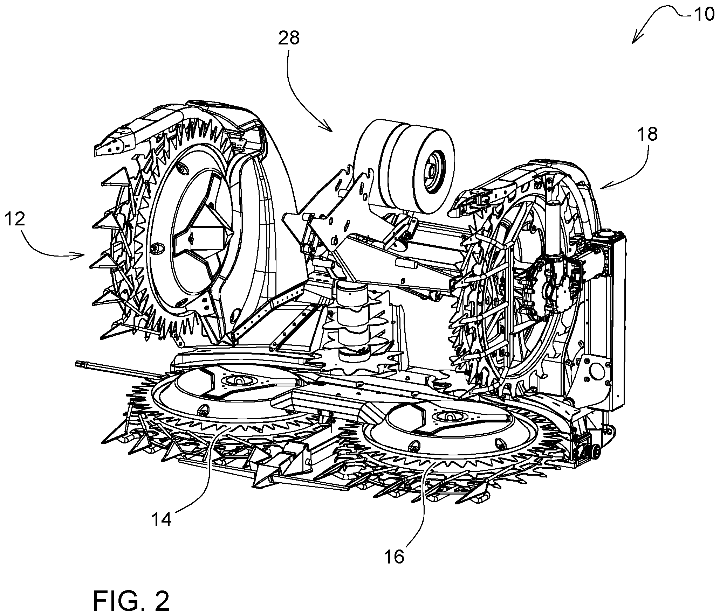

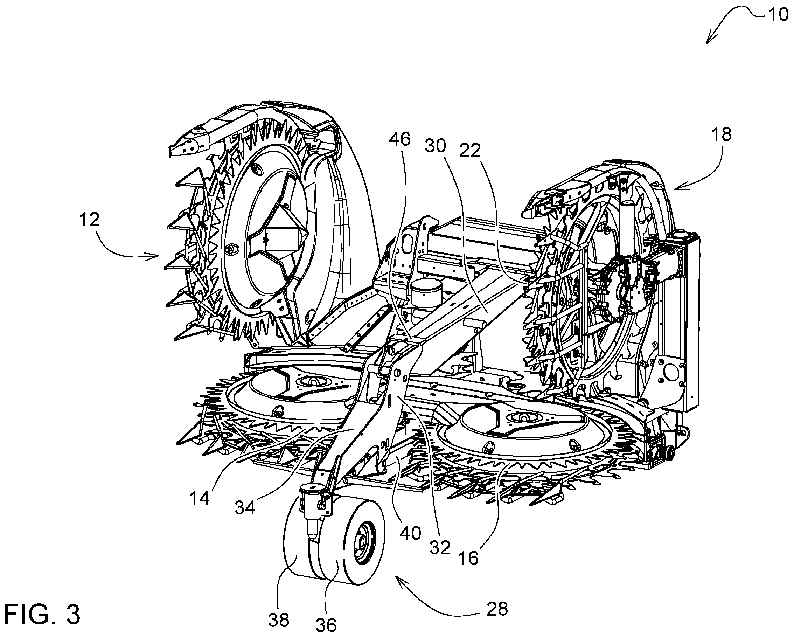

Die Figur 1 zeigt eine perspektivische Ansicht eines Erntevorsatzes 10, der in einer Vorwärtsrichtung V über ein Feld bewegbar ist, um Erntegut aufzunehmen. Der Erntevorsatz 10 ist in der dargestellten Ausführungsform ein Mähvorsatz zur Ernte von stängelartigen Pflanzen, wie Mais und umfasst vier Mäh- und Einzugseinrichtungen 12 bis 18, die in an sich bekannter Weise aus unteren Mähscheiben zum Abschneiden der Pflanzen und darüber angeordneten Förderscheiben mit um ihren Umfang verteilten Aussparungen zur Aufnahme und Abförderung der Pflanzen ausgestattet sind. Die mittleren Mäh- und Einzugseinrichtungen 14, 16 sind fest an einem Mittelteil 20 des Erntevorsatzes 10 angebracht, während die äußeren Mäh- und Einzugseinrichtungen12 und 18 nach oben schwenkbar (einfaltbar) sind, um die Transportbreite des Erntevorsatzes 10 für eine Straßenfahrt zu vermindern, vgl. die Figuren 2 und 3. Der Erntevorsatz 10 könnte in einer anderen Ausführungsform auch als Schneidwerk für einen Mähdrescher mit einem Messerbalken, einer Haspel und einem Querförderer, oder als Pick-up mit einer Aufnehmerwalze und einer Querförderschnecke ausgeführt sein. Im Folgenden beziehen sich Richtungsangaben, wie vorn und hinten, auf die Vorwärtsrichtung V des Erntevorsatzes 10 beim Erntevorgang.

Der dargestellte Erntevorsatz 10 wird zum Erntevorgang an einer selbstfahrenden Erntemaschine insbesondere in Form eines Feldhäckslers (nicht gezeigt) befestigt. Die lösbare Anbringung des Erntevorsatzes 10 erfolgt mittels eines oberen Querträgers 22, mit dem geeignete, an der Vorderseite des Einzugskanals des Feldhäckslers (bzw. eines zwischen dem Einzugskanal und dem Erntevorsatz 10 angebrachten Pendelrahmens) angebrachte Haltelemente, z.B. Haken, zusammenwirken. Weitere Verriegelungen können an beliebigen Stellen vorgesehen sein, z.B. zwischen der Unterseite des Einzugskanals oder des Pendelrahmens einerseits und einem unteren Querträger 26 des Erntevorsatzes 10 andererseits. Der obere Querträger 22 ist durch seitliche Stützen 24 mit dem unteren Querträger 26 verbunden. Hierzu sei beispielhaft auf die Offenbarung der DE 10 2010 028 605 A1 verwiesen.

### Stützradzusammenbau

Während die bisher geschilderten Bestandteile des Erntevorsatzes 10 an sich bekannt sind und somit hier auf eine weitere Diskussion verzichtet werden kann, ist der Erntevorsatz 10 mit einem Stützradzusammenbau 28 ausgestattet, der in den Figuren 1 und 2 in der Ernteposition und in der Figur 3 in der Straßenfahrposition gezeigt wird. Beim Übergang vom Erntebetrieb zu einer Straßenfahrt werden die Seitenteile des Erntevorsatzes 10 mit den äußeren Mäh- und Einzugseinrichtungen 12 und 18 jeweils nach innen und oben eingeschwenkt, um die Transportbreite zu reduzieren (s. Figur 2) und gleichzeitig oder zuvor oder danach der Stützradzusammenbau 28 in eine Straßenfahrposition verbracht, in welcher er in einer Bodeneingriffsposition ist, um die Belastung der Vorderräder der selbstfahrenden Erntemaschine bzw. des Feldhäckslers zu vermindern. Aus Sicherheitsgründen kann für die Straßenfahrt zudem eine hier aus Gründen der Übersichtlichkeit nicht gezeigte Abdeckung des Erntevorsatzes 10 von der Rückseite an die seitlichen und vorderen Bereiche des Erntevorsatzes 10 verbracht werden, wie in der nachveröffentlichten DE 10 2024 116 861 A1, deren Offenbarung durch Verweis in die vorliegenden Unterlagen aufgenommen wird, gezeigt und beschrieben ist.

Der Stützradzusammenbau 28 ist auf der Längsmittelebene des Erntevorsatzes 10 angeordnet. Der Stützradzusammenbau 24 umfasst eine rückwärtige Strebe 30, die mit ihrem rückwärtigen Ende um die horizontale Querachse schwenkbar am oberen Querträger 22 des Erntevorsatzes 10 schwenkbar befestigt ist. An ihrem vorderen Ende ist die rückwärtige Strebe 30 um die Querachse schwenkbar mit einem Zwischenelement 32 verbunden, das in der Straßenfahrposition mit einer Längsstrebe 40 des Rahmens des Erntevorsatzes 10 lösbar gekoppelt ist. Die Längsstrebe 40 liegt in der vertikalen Symmetrieebene des Erntevorsatzes 10 und haltert an ihrer Vorderseite eine Teilerspitze 42 und einen Tastmechanismus 44 zur Erfassung der Pflanzenreihen auf dem Feld, der zur selbsttätigen Lenkung des Feldhäckslers dient. Mit dem Zwischenelement 32 ist auch eine vordere Strebe 30 um die Querachse starr gekoppelt. Die vordere Strebe 30 haltert ihrerseits zwei Räder 36, 38, die bei in die Straßenfahrposition verbrachtem Stützradzusammenbau 28 im Bodeneingriff sind.

Wie beispielsweise in der Figur 1 gezeigt wird, erstreckt sich die rückwärtige Strebe 30 in der Ernteposition des Stützradzusammenbaus (Figur 1) vom oberen Querträger 22 schräg nach vorn und oben. Das von der Längsstrebe 40 gelöste Zwischenelement 32 erstreckt sich vom vorderen Ende der rückwärtigen Strebe 30 schräg nach oben und hinten, und die vordere Strebe 34 erstreckt sich oberhalb der rückwärtigen Strebe 30 vom Zwischenelement 32 ausgehend parallel zu der rückwärtigen Strebe 30 nach hinten und unten. Die Räder 36, 38 befinden sich oberhalb des (dann rückwärtigen) Endes der vorderen Strebe 34. Dadurch erreicht man, dass der Stützradzusammenbau 28 sich oberhalb und rückwärtig des Erntegutflusses des Erntevorsatzes 10 befindet und den Erntegutfluss nicht stört. Der vordere Bereich des Stützradzusammenbaus 28 kann in der Ernteposition als Vordruckbügel dienen, d.h. verhindern, dass sich Pflanzen zu weit nach hinten neigen, um abgeschnitten und abtransportiert werden.

Wie hingegen beispielsweise in der Figur 3 gezeigt ist, erstreckt sich in der Straßenfahrposition die rückwärtige Strebe 30 zumindest näherungsweise horizontal vom oberen Querträger 20 nach vorn. Das Zwischenelement 32 ist mit der Längsstrebe 40 verriegelt und liegt von oben her am Anschlag 46 an, der an der Oberseite der rückwärtigen Strebe 30 angebracht ist. Die vordere Strebe 34 erstreckt sich vom Zwischenelement 32 nach vorn und die Räder 36, 38 sind im Bodeneingriff.

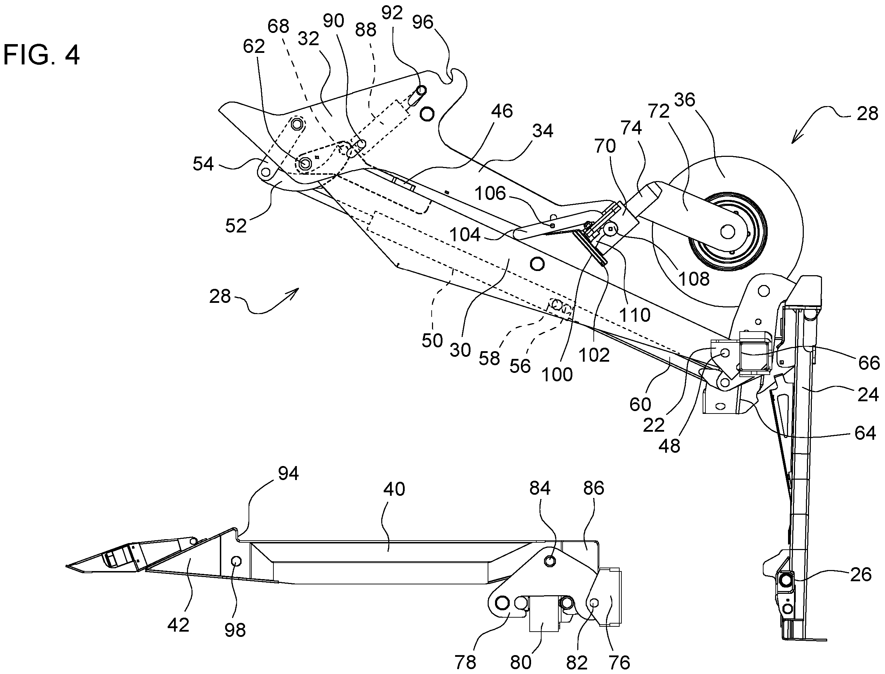

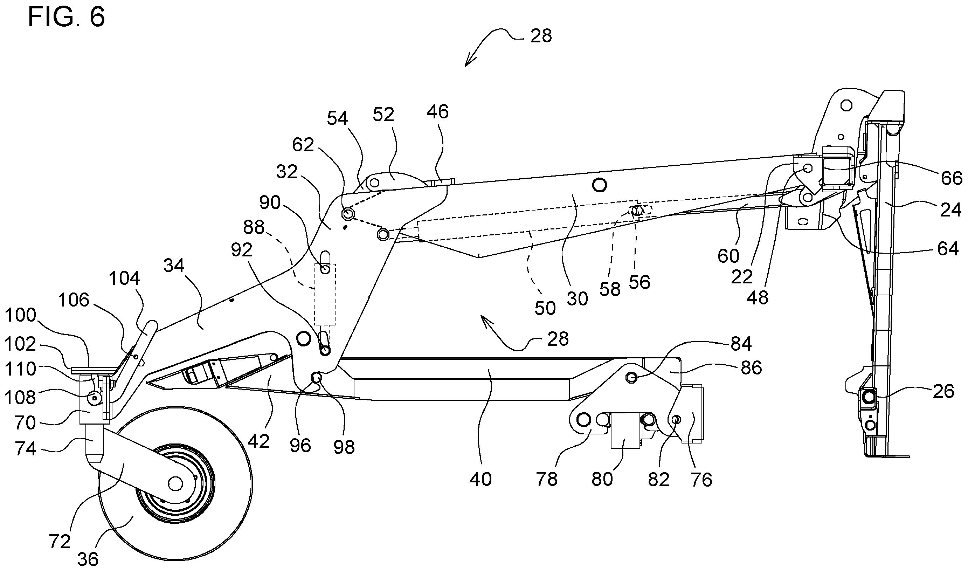

Es wird nun auf die Figuren 4 bis 9 verwiesen, in denen der Stützradzusammenbau 28 aus Gründen der Übersichtlichkeit ohne Erntevorsatz 10 gezeigt wird. In der Figur 4 ist der Stützradzusammenbau 28 in der Ernteposition dargestellt, analog zur Figur 1, während er in der Figur 6 in der Straßenfahrposition gezeigt wird, analog zur Figur 3. Die Verstellung des Stützradzusammenbaus 28 zwischen den beiden Positionen erfolgt durch einen Aktor in Form eines Hydraulikzylinders 50, dessen Kolbenstange um die Querachse schwenkbar mit einer geraden Schwinge 54 verbunden ist, die zudem um die Querachse schwenkbar mit dem Zwischenelement 32 gekoppelt ist. Das Zwischenelement 32 ist zudem um eine in Querrichtung verlaufende Achse 62 schwenkbar mit der rückwärtigen Strebe 30 verbunden, die ihrerseits um eine in Querrichtung verlaufende Achse 48 mit dem oberen Querträger 22 schwenkbar gekoppelt ist. Das Gehäuse des Hydraulikzylinders 50 ist über einen Zapfen 56 in einem Langloch 58 verschiebbar gelagert, welches sich in der rückwärtigen Strebe 30 befindet, sodass der Zapfen 56 und somit das Gehäuse des Hydraulikzylinders 50 in Längsrichtung der rückwärtigen Strebe 30 über einen bestimmten Weg entlang des Langlochs 58 und somit der rückwärtigen Strebe 30 beweglich sind. Das Gehäuse des Hydraulikzylinders 50 ist zudem mit einer Stange 60 verbunden, die am anderen Ende um eine quer verlaufende Drehachse 64 mit dem oberen Querträger 22 bzw. einem damit verbundenen Blech 66 gekoppelt. Die gerade Schwinge 54 und die Kolbenstange des Hydraulikzylinders 50 sind weiterhin um die Querachse schwenkbar mit einer gekrümmten Schwinge 52 verbunden, die um eine quer verlaufende Drehachse 68 mit dem Zwischenelement 32 gekoppelt ist. Die vordere Strebe 34 liegt in der Ernteposition von oben her am Anschlag 46 an und in der Straßenfahrposition liegt die vordere Strebe 34 von unten her am Anschlag 46 an.

Am in der Figur 4 rückwärtig eingezeichneten Ende ist an der vorderen Strebe 34 ein Gehäuse 70 befestigt, das eine Achse 74 mit einer damit starr verbundenen Radhalterung 72 in der Straßenfahrposition um die Hochachse schwenkbar haltert. An der Radhalterung 72 sind beidseits die Räder 36, 38 drehbar gelagert.

Die Längsstrebe 40 ist mit ihrem rückwärtigen Ende um eine quer verlaufende Achse 84 an einer Zwischenkonsole 78 gelagert, die um eine quer verlaufende Achse 82 an einer Konsole 76 drehbar gelagert ist, die ihrerseits starr mit dem unteren Querträger 26 gekoppelt ist. Ein Federelement 80 in Form eines Gummipuffers ist einen Endes um die Querachse drehbar mit der Zwischenkonsole 78 und anderen Endes mit einer Halterung 86 verbunden, die starr mit der Längsstrebe 40 gekoppelt ist. Somit ist die Längsstrebe 40 an ihrem rückwärtigen Ende um die Achse 84 um einen gewissen Schwenkwinkelbereich schwenkbar um die Querachse gelagert. Diese Schwenkbewegung wird durch das Federelement 80 begrenzt.

Weiterhin ist ein Verriegelungszylinder 88 mit seinem Gehäuse über ein Langloch 90 und einen darin eingreifenden Stift gegenüber dem Zwischenelement 32 verschiebbar gelagert und haltert einen Bolzen 92, der in eine passende Vertiefung 94 an der Oberseite des vorderen Endes der Längsstrebe 40 einführbar ist (s. Figuren 6 bis 8). Das Zwischenelement 32 umfasst zudem einen unteren Haken 96, der mit einem Haltestift 98 an der Vorderseite der Längsstrebe 40 zusammenwirkt, wenn sich der Stützradzusammenbau 28 in der Straßenfahrposition befindet.

### Funktionsweise

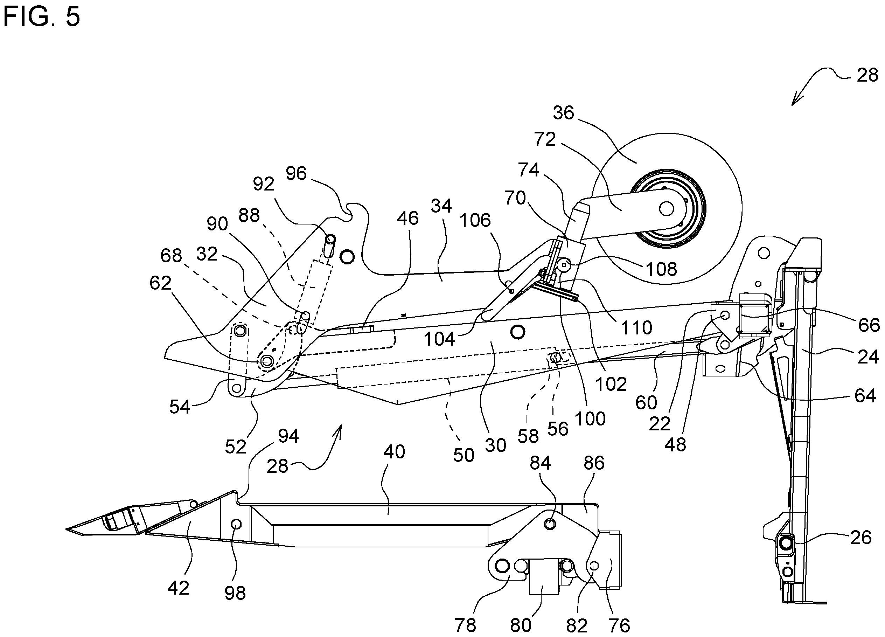

Ausgehend von der Ernteposition nach Figur 1 und 4, in welcher der Hydraulikzylinder 50 ausgestreckt ist und der Zapfen 56 am rückwärtigen Ende des Langlochs 58 anliegt, wird die Kolbenstange des doppeltwirkenden Hydraulikzylinders 50 eingezogen. Dann bewegt sich zunächst der Zapfen 56 im Langloch 58 nach vorn, bis er an dessen vorderem Ende anschlägt. Hierdurch ergibt sich eine gewisse Bewegung der rückwärtigen Strebe 30 um die Achse 48 nach unten, da ja die rückwärtige Strebe 30 an um Achse 48 drehbar am oberen Querträger 22 gelagert ist und der Zapfen 56 über die Stange 60 und die Achse 64 ebenfalls mit dem oberen Querträger 22 gekoppelt ist. Diese Zwischenposition ist in der Figur 5 wiedergegeben.

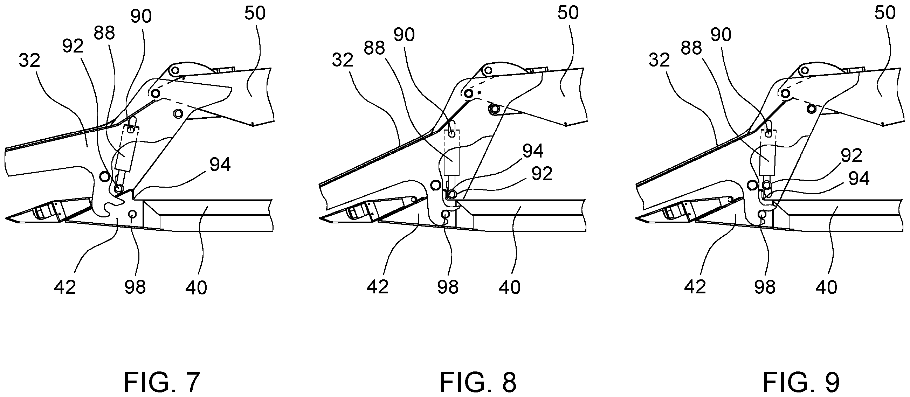

Anschließend verschwenkt der Hydraulikzylinder 50 das Zwischenelement 32 und die starr damit verbundene, vordere Strebe 34 um die Achse 62, wobei die Schwingen 52, 54 eine hinreichende Übersetzung bereitstellen. Man erhält dann die Position nach Figur 7, wo sich der Haken 96 dem Haltestift 98 nähert und der Bolzen 92 an der nach hinten ansteigenden Oberseite der Teilerspitze 42 bzw. dem dahinter liegenden Bereich der Oberseite der Längsstrebe 40 aufliegt. Der Verriegelungszylinder 88 ist dann ausgestreckt und kann dank des Langlochs 90 nach oben wandern, sodass der Bolzen 92 an der Oberseite der Teilerspitze 42 entlanggleitet, bis er in die Vertiefung 94 fällt. Dabei gleitet auch der Verriegelungszylinder 88 im Langloch 90 nach unten und man erhält die Situation nach Figur 8. Der Haken 96 umschließt dann den Haltestift 98 und der Bolzen 92 liegt in der Vertiefung 94 und kann weder nach vorn noch nach unten ausweichen. Das Eingreifen des Bolzens 92 in die Vertiefung 94 wird vorzugsweise durch einen Sensor (nicht gezeigt) erfasst und dem Bediener der Erntemaschine über eine Bedienerschnittstelle angezeigt bzw. zur Erteilung einer Freigabe verwendet, die Erntemaschine in einen Straßenfahrmodus umzuschalten, denn erst jetzt ist der Stützradzusammenbau 28 für eine Straßenfahrt bereit. Zudem liegt dann das Zwischenelement 32 von unten her am Anschlag 46 an.

Bei der Straßenfahrt ist der Stützradzusammenbau 28 nicht in sich starr und auch nicht starr mit dem Rahmen des Erntevorsatzes 10 verbunden, sondern es gibt drei Stellen, die eine gewisse Beweglichkeit zulassen. Dadurch vermeidet man eine übergroße Belastung des Stützradzusammenbaus 28, wenn beispielsweise eine Erhebung im Boden überfahren wird. Diese beweglichen Stellen finden sich an der Achse 48, an welcher die rückwärtige Strebe 30 am oberen Querträger 22 angelenkt ist, am Haken 96 und Haltestift 98, die ebenfalls eine Relativbewegung um die Querachse ermöglichen, und zwischen der Längsstrebe 40 und der Konsole 76 an der Achse 84, dort durch das Federelement 80 abgefedert bzw. bedämpft. Da die Räder 36, 38 den Erntevorsatz 10 nach unten hin abstützen, bzw. die auf den Erntevorsatz 10 wirkende Schwerkraft zumindest zum Teil (und zum anderen Teil über den Einzugskanal und im Wesentlichen über die Vorderräder der selbstfahrenden Erntemaschine) auf den Boden abgeleitet wird, ziehen diese Kräfte das Zwischenelement 32 gegen den Anschlag 46. Das Zwischenelement 32 und die rückwärtige Strebe 30 können somit bei der Straßenfahrt als aneinander fixiert angesehen werden. Es wird bei der Straßenfahrposition durch den Stützradzusammenbau und den tragenden Rahmen des Erntevorsatzes 10 ein Parallelogramm gebildet, mit den drei erwähnten beweglichen Stellen. Hinzu kommt noch eine gewisse, materialbedingte Elastizität in den an sich starren Bestandteilen des Parallelogramms. Der Hydraulikzylinder 50 ist in der Straßenfahrposition in einer Schwimmstellung, damit die Bewegung der rückwärtigen Strebe 30 um die Achse 48 nicht durch die Stange 60 verhindert wird.

Die Rückbewegung des Stützradzusammenbaus 28 in die Ernteposition erfolgt in umgekehrter Reihenfolge und Richtung. Zunächst wird der Verriegelungszylinder 88 eingezogen, wie in der Figur 9 gezeigt und dann der Hydraulikzylinder 50 im Sinne eines Ausfahrens der Kolbenstange aktiviert, sodass sich zunächst die vordere Strebe 30 ausgehend von der Position nach Figur 5 um die Achse 62 dreht und der Haken 96 sich vom Haltestift 98 trennt, bis das Zwischenelement 32 von oben her am Anschlag 46 anliegt. Letztlich bewegt sich noch der Zapfen 56 im Langloch 58 nach hinten, was über die Stange 60 zu einer Anhebung der rückwärtigen Strebe 30 und der damit verbundenen Bauteile führt und man wieder die Lage nach Figur 1 und 4 für die Ernteposition erhält.

### Bremse

Die Räder 36, 38 sind als Nachlauflenkräder ausgeführt; die Achse 74 mit der Radhalterung 72 und den Rädern 36, 38 kann sich, wie bereits dargelegt, in der Straßenfahrposition um die Hochachse gegenüber dem Gehäuse 70 und somit gegenüber der vorderen Strebe 34 drehen. Es wurde festgestellt, dass bei gewissen Betriebssituationen und Geschwindigkeiten eine Neigung der Räder 36, 38 zum Flattern vorliegt. Um diese Flatterneigung zu vermeiden oder zumindest zu vermindern, ist eine Reibungsbremse vorgesehen (vgl. DE 1 860 835 U). Diese Reibungsbremse umfasst eine erste Bremsscheibe 102 und eine zweite Bremsscheibe 100. Beide Bremsscheiben 102, 100 sind an der von der Radhalterung 72 beabstandeten Seite des Gehäuses 70 angeordnet. Die zweite Bremsscheibe 100 ist mit der Achse 74 verbunden. Die Achse 74 erstreckt sich axial durch das Gehäuse 70 hindurch, in dem die Achse 74 drehbar und axial unverschieblich gelagert ist. Die erste Bremsscheibe 102 ist parallel zur zweiten Bremsscheibe 100 angeordnet und in axialer Richtung des Gehäuses 70 verschiebbar. Zwischen den Bremsscheiben 100, 102 sind zwei Reibbeläge angeordnet, von denen je einer fest mit einer der Bremsscheiben 100, 102 verbunden sind.

Die zweite Bremsscheibe 102 ist mittels zweier, am Gehäuse 70 diametral gegenüber angeordneter Pleuel 110 axial bewegbar. Die Pleuel 110 sind um sich quer erstreckende Achsen 108 am Gehäuse 70 drehbar und werden durch jeweils einen von zwei Hebeln 104 bewegt, die ihrerseits um quer verlaufende Achsen 106 an der vorderen Strebe 34 angelenkt sind. Die Hebel 104 werden durch die Kraft einer oder mehrerer Federn beaufschlagt, sodass sie die Pleuel 110 gegen die erste Bremsscheibe 102 drücken und die Bremse aktiviert ist, solange die Wirkung der Feder(n) nicht anderweitig aufgehoben wird.

Die Hebel 104 wirken in der Straßenfahrposition nicht mit anderen Elementen des Stützradzusammenbaus 28 oder des Erntevorsatzes 10 zusammen, wie in den Figuren 3 und 6 gezeigt. Die Bremse ist demnach aktiv, denn die Hebel 104 drücken die Pleuel 110 nach oben und pressen die Bremsscheiben 100, 102 zusammen. Wenn der Stützradzusammenbau 28 hingegen aus der Straßenfahrposition in die Ernteposition verbracht wird, gelangen die äußeren Enden der Hebel 104 erst kurz vor Ende der Bewegung in die Ernteposition in Anlage mit der Oberseite der rückwärtigen Strebe 30, sodass die Hebel 104 die Pleuel 110 nicht mehr aktivieren und die Bremse gelöst wird. Dadurch drehen sich die Räder 36, 38 aufgrund der Schwerkraft nach hinten, sobald beim Verschwenken des Stützradzusammenbaus 28 durch den Hydraulikzylinder 50 die Hebel 104 an der rückwärtigen Strebe 30 anliegen und beim Erreichen dieser Stellung die Achse 74 nach hinten geneigt ist.

Durch einen weiteren, in den Figuren nicht gezeigten Mechanismus kann man erreichen, dass die Bremse zwangsweise wieder aktiviert wird, wenn sich die Räder 36, 38 in der hinteren Stellung befinden, wie sie in den Figuren 1 und 4 gezeigt ist. Ein derartiger Mechanismus kann einen Nocken am Umfang der ersten Bremsscheibe 100 umfassen, der über einen weiteren Hebelmechanismus die Pleuel 110 und somit die Bremse nur dann aktiviert, wenn die Räder 36, 38 in der hinteren Stellung sind. Dadurch vermeidet man, dass die Räder 36, 38 bei der Fahrt frei herumschwingen. Zudem vermeidet man, dass sie beim Herunterbewegen des Stützradzusammenbaus 28 aus der Ernteposition in die Straßenfahrposition nach hinten drehen und den Tastmechanismus 44 beschädigen.

Zudem wird die Bremse wieder aktiviert, wenn der Hydraulikzylinder 50 den Stützradzusammenbau 28 wieder nach unten schwenkt und die Hebel 104 außer Eingriff mit der rückwärtigen Strebe 30 geraten (dann wird die Bremse sowohl durch die Hebel 104, sobald diese nicht mehr an der rückwärtigen Strebe 30 anliegen, wie auch durch den Nocken aktiviert).

## Patentansprüche

1. Stützradzusammenbau (28) für einen Erntevorsatz (10), wobei:
der Erntevorsatz (10) ein tragendes Gestell umfasst, an einer selbstfahrenden Erntemaschine anbringbar und in einer Vorwärtsrichtung (V) über ein Feld bewegbar ist, und
der Stützradzusammenbau (28) zumindest ein Rad (36, 38) umfasst, das in der Weise am tragenden Gestell des Erntevorsatzes (10) befestigt ist, dass das Rad (36, 38) zwischen einer Ernteposition, in der das Rad (36, 38) nicht im Bodeneingriff ist, und einer Straßenfahrposition beweglich ist, in der sich das Rad (36, 38) im Bodeneingriff befindet und den bei der Straßenfahrt an der Erntemaschine verbleibenden Erntevorsatz (10) abstützt,
**dadurch gekennzeichnet, dass** sich das Rad (36, 38) in der Ernteposition oberhalb des Erntevorsatzes (10) befindet.

2. Stützradzusammenbau (28) nach Anspruch 1, wobei der Stützradzusammenbau (28) eine rückwärtige, sich insbesondere von einem oberen Querträger (22) des tragenden Gestells des Erntevorsatzes (10) nach vorn erstreckende Strebe (30) umfasst.

3. Stützradzusammenbau (28) nach Anspruch 2, wobei die rückwärtige Strebe (30) um eine quer zur Vorwärtsrichtung (V) verlaufende Achse (48) zwischen einer angehobenen Ernteposition und einer abgesenkten Straßenfahrposition schwenkbar am Gestell des Erntevorsatzes (10) angelenkt ist.

4. Stützradzusammenbau (28) nach Anspruch 2 oder 3, wobei die Halterung eine vordere Strebe (34) umfasst, die um eine quer zur Vorwärtsrichtung (V) verlaufende Achse (62) schwenkbar mit der rückwärtigen Strebe (30) verbunden ist, wobei am äußeren Ende der vorderen Strebe (34) eine Radhalterung (72) mit dem Rad (36, 38) schwenkbar angebracht ist und sich die vordere Strebe (34) in der Ernteposition oberhalb der rückwärtigen Strebe (30) von der Achse (62) nach hinten erstreckt und in der Straßenfahrposition von der Achse (62) nach vorn und unten erstreckt.

5. Stützradzusammenbau (28) nach Anspruch 4, wobei die vordere Strebe (34) in der Straßenfahrposition mit einer Längsstrebe (40) des Erntevorsatzes (10) koppelbar ist, an welcher insbesondere eine Teilerspitze (42) und/oder ein Tastmechanismus (44) zur Erfassung der Pflanzenreihen auf dem Feld, der zur selbsttätigen Lenkung der Erntemaschine dient, angebracht ist.

6. Stützradzusammenbau (28) nach Anspruch 5, wobei die vordere Strebe (34) in der Straßenfahrposition mittels eines Hakens (96) mit einem an der Längsstrebe (40) angebrachten Haltestift (98) um dessen sich quer erstreckende Achse drehbar koppelbar ist und/oder mittels eines durch einen Verriegelungszylinders (98) verschiebbaren Bolzens (92) relativ zur Längsstrebe (40) gegenüber einer Bewegung in der Vorwärtsrichtung (V) nach vorn sicherbar ist.

7. Stützradzusammenbau (28) nach Anspruch 6, wobei die Längsstrebe (40) gegenüber dem tragenden Gestell des Erntevorsatzes (10) um eine Achse (84) drehbar ist, wobei die Bewegung der Längsstrebe (40) um die Achse (84) durch ein Federelement (80) gedämpft und/oder begrenzt ist, und die rückwärtige Strebe (30) in der Straßenfahrposition um die Achse (48) frei schwenkbar am tragenden Gestell des Erntevorsatzes (10) gelagert ist, während die vordere Strebe (34) und die rückwärtige Strebe (30) in der Straßenfahrposition gegeneinander gegenüber einer Drehung um die Achse (62) drehfest arretiert sind.

8. Stützradzusammenbau (28) nach einem der Ansprüche 4 bis 7, wenn rückbezogen auf den Anspruch 3, wobei die Schwenkbewegung der vorderen Strebe (34) und der rückwärtigen Strebe (30) um die jeweiligen Achsen (48, 62) mittels eines einzigen Aktors, insbesondere eines Hydraulikzylinders (50), bewerkstelligbar ist.

9. Stützradzusammenbau (28) nach Anspruch 8, wobei der Aktor derart mit den Streben (30, 34) gekoppelt ist, dass ausgehend von der Ernteposition zunächst die rückwärtige Strebe (30) um die Achse (48), mit der sie am Gestell angelenkt ist, nach unten geschwenkt wird und anschießend die vordere Strebe (34) gegenüber der rückwärtigen Strebe (30) um ihre Achse (62) nach vorn und unten in die Straßenfahrposition geschwenkt wird.

10. Stützradzusammenbau (28) nach Anspruch 9, wobei der Aktor mit einem ersten Ende mit der vorderen Strebe (34) gekoppelt ist und mit einem zweiten Ende über einen Zapfen (56), der in einem Langloch (58) der rückwärtigen Strebe (30) verschiebbar gelagert ist, mit der rückwärtigen Strebe (30) und zudem direkt, insbesondere über eine Stange (60), mit dem tragenden Gestell des Erntevorsatzes (10) gekoppelt ist.

11. Stützradzusammenbau (28) nach einem der Ansprüche 4 bis 10, wobei die vordere Strebe (34) in der Straßenfahrposition von oben her an einem Anschlag (46) der rückwärtigen Strebe (30) anliegt, sodass die vordere Strebe (34) und die rückwärtige Strebe (30) drehfest gekoppelt sind, und/oder die vordere Strebe (34) in der Ernteposition von unten her an einem Anschlag (46) der rückwärtigen Strebe (30) anliegt.

12. Stützradzusammenbau (28) nach einem der Ansprüche 4 bis 11, wobei die Radhalterung (72) in der Straßenfahrposition um die Hochachse drehbar mit der vorderen Strebe (34) verbunden ist.

13. Stützradzusammenbau (28) nach Anspruch 12, wobei zwischen der Radhalterung (72) und der vorderen Strebe (34) eine Bremse angeordnet ist, die in der Straßenfahrposition und der Ernteposition aktiv ist und während der Bewegung der vorderen Strebe (34) aus der Straßenfahrposition in die Ernteposition, insbesondere erst kurz vor Erreichen der Ernteposition, selbsttätig gelöst wird, damit die Radhalterung (72) mit dem Rad (36, 38) schwerkraftbedingt in eine nach hinten orientierte Stellung gelangt, in der sie in der Ernteposition aufgrund der dann, insbesondere aufgrund der schwerkraftbedingten Drehung der Radhalterung (72), aktivierten Bremse verbleibt, während die Bremse bei der Bewegung der vorderen Strebe (34) aus der Ernteposition in die Straßenfahrposition arretiert bleibt.

14. Erntevorsatz mit einem Stützradzusammenbau (28) nach einem der vorhergehenden Ansprüche.

15. Selbstfahrende Erntemaschine, insbesondere Feldhäcksler oder Mähdrescher, mit einem Erntevorsatz (10) nach Anspruch 14.

## Geänderte Patentansprüche

### Geänderte Patentansprüche gemäss Regel 137(2) EPÜ.

1. Stützradzusammenbau (28) für einen Erntevorsatz (10), wobei:
der Erntevorsatz (10) ein tragendes Gestell umfasst, an einer selbstfahrenden Erntemaschine anbringbar und in einer Vorwärtsrichtung (V) über ein Feld bewegbar ist, und
der Stützradzusammenbau (28) zumindest ein Rad (36, 38) umfasst, das in der Weise am tragenden Gestell des Erntevorsatzes (10) befestigt ist, dass das Rad (36, 38) zwischen einer Ernteposition, in der das Rad (36, 38) nicht im Bodeneingriff ist, und einer Straßenfahrposition beweglich ist, in der sich das Rad (36, 38) im Bodeneingriff befindet und den bei der Straßenfahrt an der Erntemaschine verbleibenden Erntevorsatz (10) abstützt,
**dadurch gekennzeichnet, dass** sich das Rad (36, 38) in der Ernteposition oberhalb des Erntevorsatzes (10) befindet, dass der Stützradzusammenbau (28) eine rückwärtige, sich insbesondere von einem oberen Querträger (22) des tragenden Gestells des Erntevorsatzes (10) nach vorn erstreckende Strebe (30) umfasst, dass die rückwärtige Strebe (30) um eine quer zur Vorwärtsrichtung (V) verlaufende Achse (48) zwischen einer angehobenen Ernteposition und einer abgesenkten Straßenfahrposition schwenkbar am Gestell des Erntevorsatzes (10) angelenkt ist und dass der Stützradzusammenbau (28) eine vordere Strebe (34) umfasst, die um eine quer zur Vorwärtsrichtung (V) verlaufende Achse (62) schwenkbar mit der rückwärtigen Strebe (30) verbunden ist, wobei am äußeren Ende der vorderen Strebe (34) eine Radhalterung (72) mit dem Rad (36, 38) schwenkbar angebracht ist und sich die vordere Strebe (34) in der Ernteposition oberhalb der rückwärtigen Strebe (30) von der Achse (62) nach hinten erstreckt und in der Straßenfahrposition von der Achse (62) nach vorn und unten erstreckt.

2. Stützradzusammenbau (28) nach Anspruch 1, wobei die vordere Strebe (34) in der Straßenfahrposition mit einer Längsstrebe (40) des Erntevorsatzes (10) koppelbar ist, an welcher insbesondere eine Teilerspitze (42) und/oder ein Tastmechanismus (44) zur Erfassung der Pflanzenreihen auf dem Feld, der zur selbsttätigen Lenkung der Erntemaschine dient, angebracht ist.

3. Stützradzusammenbau (28) nach Anspruch 2, wobei die vordere Strebe (34) in der Straßenfahrposition mittels eines Hakens (96) mit einem an der Längsstrebe (40) angebrachten Haltestift (98) um dessen sich quer erstreckende Achse drehbar koppelbar ist und/oder mittels eines durch einen Verriegelungszylinders (98) verschiebbaren Bolzens (92) relativ zur Längsstrebe (40) gegenüber einer Bewegung in der Vorwärtsrichtung (V) nach vorn sicherbar ist.

4. Stützradzusammenbau (28) nach Anspruch 3, wobei die Längsstrebe (40) gegenüber dem tragenden Gestell des Erntevorsatzes (10) um eine Achse (84) drehbar ist, wobei die Bewegung der Längsstrebe (40) um die Achse (84) durch ein Federelement (80) gedämpft und/oder begrenzt ist, und die rückwärtige Strebe (30) in der Straßenfahrposition um die Achse (48) frei schwenkbar am tragenden Gestell des Erntevorsatzes (10) gelagert ist, während die vordere Strebe (34) und die rückwärtige Strebe (30) in der Straßenfahrposition gegeneinander gegenüber einer Drehung um die Achse (62) drehfest arretiert sind.

5. Stützradzusammenbau (28) nach einem der Ansprüche 1 bis 3, wobei die Schwenkbewegung der vorderen Strebe (34) und der rückwärtigen Strebe (30) um die jeweiligen Achsen (48, 62) mittels eines einzigen Aktors, insbesondere eines Hydraulikzylinders (50), bewerkstelligbar ist.

6. Stützradzusammenbau (28) nach Anspruch 5, wobei der Aktor derart mit den Streben (30, 34) gekoppelt ist, dass ausgehend von der Ernteposition zunächst die rückwärtige Strebe (30) um die Achse (48), mit der sie am Gestell angelenkt ist, nach unten schwenkbar ist und anschließend die vordere Strebe (34) gegenüber der rückwärtigen Strebe (30) um ihre Achse (62) nach vorn und unten in die Straßenfahrposition schwenkbar ist.

7. Stützradzusammenbau (28) nach Anspruch 6, wobei der Aktor mit einem ersten Ende mit der vorderen Strebe (34) gekoppelt ist und mit einem zweiten Ende über einen Zapfen (56), der in einem Langloch (58) der rückwärtigen Strebe (30) verschiebbar gelagert ist, mit der rückwärtigen Strebe (30) und zudem direkt, insbesondere über eine Stange (60), mit dem tragenden Gestell des Erntevorsatzes (10) gekoppelt ist.

8. Stützradzusammenbau (28) nach einem der Ansprüche 1 bis 7, wobei die vordere Strebe (34) in der Straßenfahrposition von oben her an einem Anschlag (46) der rückwärtigen Strebe (30) anliegt, sodass die vordere Strebe (34) und die rückwärtige Strebe (30) drehfest gekoppelt sind, und/oder die vordere Strebe (34) in der Ernteposition von unten her an einem Anschlag (46) der rückwärtigen Strebe (30) anliegt.

9. Stützradzusammenbau (28) nach einem der Ansprüche 1 bis 8, wobei die Radhalterung (72) in der Straßenfahrposition um die Hochachse drehbar mit der vorderen Strebe (34) verbunden ist.

10. Stützradzusammenbau (28) nach Anspruch 9, wobei zwischen der Radhalterung (72) und der vorderen Strebe (34) eine Bremse angeordnet ist, die in der Straßenfahrposition und der Ernteposition aktiv ist und während der Bewegung der vorderen Strebe (34) aus der Straßenfahrposition in die Ernteposition, insbesondere erst kurz vor Erreichen der Ernteposition, selbsttätig gelöst wird, damit die Radhalterung (72) mit dem Rad (36, 38) schwerkraftbedingt in eine nach hinten orientierte Stellung gelangt, in der sie in der Ernteposition aufgrund der dann, insbesondere aufgrund der schwerkraftbedingten Drehung der Radhalterung (72), aktivierten Bremse verbleibt, während die Bremse bei der Bewegung der vorderen Strebe (34) aus der Ernteposition in die Straßenfahrposition arretiert bleibt.

11. Erntevorsatz mit einem Stützradzusammenbau (28) nach einem der vorhergehenden Ansprüche.

12. Selbstfahrende Erntemaschine, insbesondere Feldhäcksler oder Mähdrescher, mit einem Erntevorsatz (10) nach Anspruch 11.
